# EUROPEAN PATENT SPECIFICATION

(11) **EP 4 484 272 B1**
(45) Date of publication and mention of the grant of the patent: **25.02.2026**
(21) Application number: 23181809.7
(22) Date of filing: 27.06.2023
(51) Int. Cl.: G05D 1/49, G05D 1/606, G05D 107/00, G05D 109/30, B63B 39/06

(54) **A COMPUTER SYSTEM CONFIGURED TO ACTUATE A PITCH MOTION STABILIZER**
ZUR BETÄTIGUNG EINES NICKBEWEGUNGSSTABILISATORS KONFIGURIERTES COMPUTERSYSTEM
SYSTÈME INFORMATIQUE CONÇU POUR ACTIONNER UN STABILISATEUR DE MOUVEMENT DE PAS

(43) Date of publication of application: 01.01.2025
(73) Proprietor: Humphree AB, 417 05 Göteborg (SE)
(72) Inventor: LANDIN, Nils, 417 09 Göteborg (SE)
(74) Representative: Kransell & Wennborg KB

(56) References cited:
- JP-A- 2022 183 697
- JP-A- 2023 037 930
- US-A- 5 452 674

## Description

### TECHNICAL FIELD

The disclosure relates generally to marine vessels. In particular aspects, the disclosure relates to a computer system configured to actuate a pitch motion stabilizer of a marine vessel. The disclosure can be applied to marine vessels, such as marine vessels with inboard motor, outboard motors, ships, recreational marine vessels, etc. Although the disclosure may be described with respect to a particular marine vessel, the disclosure is not restricted to any particular marine vessel.

### BACKGROUND

During operation of a marine vessel, the marine vessel can be exposed to pitch motions of various frequencies. For example, when driving the marine vessel at relatively high speed in opposite sea, i.e. the wave propagation approaches the bow of the marine vessel, the marine vessel may be exposed to pitch motions of high frequencies. When on the other hand driving the marine vessel in in the same direction as the wave propagation, the marine vessel may be exposed to pitch motions of lower frequencies.

Conventionally, a marine vessel may comprise a pitch motion stabilizer positioned at the stern of the marine vessel. According to examples, the pitch motion stabilizer may be provided in the form of an interceptor, trim tabs, etc. The pitch motion stabilizer may thus reduce the pitch motions of the marine vessel.

However, a pitch motion stabilizer is generally not able to respond to closed loop control for pitch motions of high frequencies. Put it differently, the dynamics of the pitch motion frequencies acting on the marine vessel may be too fast in relation to the dynamics of the pitch motion stabilizer, whereby closed loop control of the pitch motion stabilizer may provide less efficient pitch control. There is thus a desire to provide an improved pitch control when the marine vessel is exposed to pitch motions of high frequencies.

### SUMMARY

According to a first aspect of the disclosure, there is provided a computer system configured to actuate a pitch motion stabilizer of a marine vessel, the computer system comprising processing circuitry configured to obtain operating data indicative of a maximum frequency of operation of the pitch motion stabilizer, the maximum frequency of operation being indicative of a capability of the pitch motion stabilizer to suppress pitch disturbances acting on the marine vessel, set a low-frequency pitch motion range and a high-frequency pitch motion range of the marine vessel, the low-frequency pitch motion range being a frequency range below the maximum frequency of operation of the pitch motion stabilizer, and the high-frequency pitch motion range being a frequency range above the maximum frequency of operation of the pitch motion stabilizer, obtain vessel motion data indicative of an amount of pitch accelerations by the marine vessel in the high-frequency pitch motion range, and reduce a trim angle of the marine vessel by controlling the pitch motion stabilizer in response to an increased amount of pitch accelerations by the marine vessel in the high-frequency pitch motion range.

The first aspect of the disclosure may seek to enable for control of the pitch motion stabilizer when the marine vessel is exposed to pitch accelerations in the high-frequency pitch motion range. The computer system discriminates between low-frequency pitch motions and high-frequency pitch motions based on the capability of the pitch motion stabilizer. Thus, the computer system is applicable for various types of pitch motion stabilizers with different capabilities. A technical benefit may include that the trim angle of the marine vessel can be reduced in an efficient manner, i.e. the marine vessel pitch stiffness as well as damping may be increased, also when the marine vessel is exposed to high-frequency pitch accelerations where closed loop control of the pitch motion stabilizer may not be applicable due to the fact that the dynamics of the pitch accelerations acting on the marine vessel are too fast in relation to the dynamics of the pitch motion stabilizer.

The computer system may advantageously automatically actuate the pitch motion stabilizer of the marine vessel. Further, and as indicated above, the capability of the pitch motion stabilizer to suppress pitch disturbances acting on the marine vessel should preferably be construed as the ability to suppress pitch disturbances by closed loop control. Hence, the ability for the pitch motion stabilizer to be controlled as desired after receiving an instruction. The inventor of the present disclosure has realized that a pitch motion stabilizer may not be able to sufficiently suppress pitch disturbances at relatively high frequencies, since the dynamic response of a pitch motion stabilizer is not sufficiently rapid. Thus, new pitch acceleration data may be obtained before the pitch motion stabilizer has acted on the previous pitch accelerations. The inventor has thus realized that, for high frequency pitch accelerations, a reduction of the trim angle of the marine vessel should be conducted without closed loop control, and to instead control the pitch motion stabilizer in response to the amount of pitch accelerations by the marine vessel in the high-frequency pitch motion range.

The pitch disturbances acting on the marine vessel should thus be construed as motions causing the marine vessel to move in the pitch direction, i.e. the pitch rate amplitude increases. The pitch disturbances may be caused by the waves at sea in combination with the speed of the marine vessel and can be reduced by the use of a pitch motion stabilizer which is preferably arranged at a distance away from a pitch center of the marine vessel, e.g. at the stern of the marine vessel. Accordingly, the trim angle, which is the angle by which the marine vessel tilts relative to the baseline of the marine vessel.

The operating data indicative of a maximum frequency of operation of the pitch motion stabilizer may be obtained in different manners, of which some are described further below. As an alternative to the below description, the operating data may be obtained by fabrication data, i.e. data received from a manufacturer of the pitch motion stabilizer. The operating data may alternatively, or additionally, be obtained by a calibration routine at which a time period for actuating the pitch motion stabilizer is measured when the pitch motion stabilizer is moved from a retracted position to a position at which the pitch motion stabilizer is extended a predetermined distance.

Further, it should be readily understood that the vessel motion data indicative of an amount of pitch acceleration can be obtained different manners. For example, the pitch accelerations can be obtained by measuring the pitch motions of the marine vessel. As an alternative, heave accelerations can be measured and used as a proxy for pitch accelerations with respect to frequency and amplitude. The heave accelerations can be correlated to the pitch accelerations and thereby form part of vessel motion data indicative of an amount of pitch accelerations by the marine vessel.

Optionally in some examples, including in at least one preferred example, the pitch motion stabilizer may be controlled in response to an increased power content of the pitch accelerations by the marine vessel in the high-frequency pitch motion range. A technical benefit may include that the power content in the pitch accelerations may form an accurate indication of how much the pitch motion stabilizer should be controlled in order to sufficiently reduce the trim angle as desired.

Optionally, in some examples, including in at least one preferred example, the pitch motion stabilizer may be controlled in response to a root-mean-square value of the pitch accelerations in the high-frequency pitch motion range. A technical benefit may include, in a similar manner as the power content, that the root-mean-square value of the pitch accelerations may form an accurate indication of how much the pitch motion stabilizer should be controlled in order to sufficiently reduce the trim angle as desired.

Optionally, in some examples, including in at least one preferred example, the vessel motion data indicative of an amount of pitch accelerations by the marine vessel in the high-frequency pitch motion range may be obtained during a predetermined time period. A technical benefit may include that the pitch accelerations currently acting on the marine vessel, i.e. at a current time instant, in combination with pitch accelerations acted on the marine vessel a period back in time can be used for e.g. obtaining a mean value. Also, the pitch motion stabilizer may be controlled in a more controlled, and less jerky manner. By setting a predetermined time period, a forgetting factor is included where pitch accelerations no longer relevant are excluded.

Optionally, in some examples, including in at least one preferred example, the predetermined time period may be determined in response to a multiple of a largest period of the pitch accelerations by the marine vessel in the high-frequency pitch motion range. A technical benefit may include that the multiple of the largest period of the pitch accelerations may reduce the risk of inaccurate control of the pitch motion stabilizer since the computer system may not include e.g. a portion of a period. As a non-limiting example, the multiple may be an integer between e.g. 4 to 20.

Optionally, in some examples, including in at least one preferred example, the pitch motion stabilizer may be controlled by a gain factor. The gain factor may indicate how rapid the pitch motion stabilizer should be controlled. The gain factor may be function of the amount of pitch accelerations by the marine vessel in the high-frequency pitch motion range. Thus, the gain factor preferably relating the amount of pitch accelerations to the extension of the pitch motion stabilizer. A technical benefit may include that the pitch motion stabilizer may be controlled in a more rapid manner for an increased amount of pitch accelerations compared to a reduced amount of pitch accelerations.

Optionally, in some examples, including in at least one preferred example, the processing circuitry may be configured to set a dead band in which pitch accelerations is non-contributing to control of the pitch motion stabilizer. Optionally, in some examples, including in at least one preferred example, the processing circuitry may be configured to set the dead band to eliminate an amount of pitch accelerations below a predetermined acceleration threshold limit. A technical benefit may include that noise or disturbances, in particular noise or disturbances at lower frequency levels, may be removed from the control of the pitch motion stabilizer. As described above, the pitch motion stabilizer may be controlled in response to the power content or a root-mean-square value of the pitch accelerations. For these examples, the dead band may thus be set to eliminate power content and root-mean-square values, respectively. Thus, a predetermined power content as well as a predetermined root-mean-square valve should be construed as forming part of the definition "predetermined acceleration threshold limit".

Optionally, in some examples, including in at least one preferred example, the pitch motion stabilizer may be controlled based on a saturation level, the saturation level defining a maximum expanded position of the pitch motion stabilizer when the pitch motion stabilizer is controlled in response to the pitch accelerations in the high-frequency pitch motion range. A technical benefit may include that the pitch motion stabilizer has an ability to be controlled by closed loop control when e.g. the marine vessel is affected by pitch accelerations in the low-frequency pitch motion range. The inventor has realized that the marine vessel may be exposed to pitch accelerations in the high-frequency pitch motion range, while simultaneously be exposed to pitch accelerations in the low-frequency pitch motion range. The pitch motion stabilizer may thus have the ability to rapidly switch to closed loop control if needed.

Optionally, in some examples, including in at least one preferred example, the processing circuitry may be configured to obtain vessel motion data indicative of an amount of pitch accelerations by the marine vessel in the low-frequency pitch motion range, determine a total amount of pitch accelerations by the marine vessel, the total pitch accelerations being the pitch accelerations in the low-frequency pitch motion range and the pitch accelerations in the high-frequency pitch motion range, determine a maximum expanded position of the pitch motion stabilizer in response to a ratio of the amount of pitch accelerations in the high-frequency pitch motion range to the total amount of pitch accelerations, and control the pitch motion stabilizer to not exceed the maximum expanded position. The marine vessel may, during a time period, be exposed to pitch accelerations in the high-frequency pitch motion range as well as in the low-frequency pitch motion range. By controlling the pitch motion stabilizer based on a ratio of the amount of pitch accelerations in the high-frequency pitch motion range, a technical benefit may include that the pitch motion stabilizer may have sufficient ability to switch to closed loop control when reducing the trim angle for low-frequency pitch accelerations by the marine vessel.

Optionally, in some examples, including in at least one preferred example, the operating data indicative of the maximum frequency may be obtained by a minimum time period for the pitch motion stabilizer to travel from a fully retracted position to a predetermined position arranged between the fully retracted position and a fully expanded position of the pitch motion stabilizer. A technical benefit may include that the dynamics of the pitch motion stabilizer may be rapidly determined for open-loop control. Thus, it can be determined how rapidly the pitch motion stabilizer can respond to an instruction. Optionally, in some examples, including in at least one preferred example, a distance to the predetermined position may be half the distance between the fully retracted position and the fully expanded position.

Optionally, in some examples, including in at least one preferred example, the computer system may further comprise a motion detector configured to determine the pitch accelerations by the marine vessel. A technical benefit may include that the motion detector may detect the current accelerations and rapidly transmit a signal to the computer system. Optionally, in some examples, including in at least one preferred example, the motion detector may be a gyro.

Optionally, in some examples, including in at least one preferred example, the pitch motion stabilizer may be an interceptor arranged at a stern of the marine vessel. A technical benefit may include that an interceptor may have rapid dynamics, i.e. the interceptor may rapidly respond to instructions from the processing circuitry. Other pitch motion stabilizers are also conceivable, such as trim tabs or the position of a propeller relative to the water surface, etc.

According to a second aspect, there is provided a marine vessel, comprising the computer system of any one of the examples described above in relation to the first aspect.

Optionally, in some examples, including in at least one preferred example, the marine vessel may further comprise a motion detector configured to determine the pitch accelerations by the marine vessel.

Optionally, in some examples, including in at least one preferred example, the pitch motion stabilizer may be an interceptor arranged at a stern of the marine vessel.

Effects and features of the second aspect are largely analogous to those described above in relation to the first aspect.

According to a third aspect, there is provided a computer-implemented method of actuating a pitch motion stabilizer of a marine vessel, the method comprising obtaining, by processing circuitry of a computer system, data indicative of a maximum frequency of operation of the pitch motion stabilizer, the maximum frequency of operation being indicative of a capability of the pitch motion stabilizer to suppress pitch disturbances acting on the marine vessel, setting, by the processing circuity, a low-frequency pitch motion range and a high-frequency pitch motion range of the marine vessel, the low-frequency pitch motion range being a frequency range below the maximum frequency of operation of the pitch motion stabilizer, and the high-frequency pitch motion range being a frequency range above the maximum frequency of operation of the pitch motion stabilizer, obtaining, by the processing circuitry, vessel motion data indicative of an amount of pitch accelerations by the marine vessel in the high-frequency pitch motion range, and reducing, by the processing circuitry, a trim angle of the marine vessel by controlling the pitch motion stabilizer in response to an increased amount of pitch accelerations by the marine vessel in the high-frequency pitch motion range.

Effects and features of the third aspect are largely analogous to those described above in relation to the first aspect.

According to a fourth aspect, there is provided a computer program product comprising program code for performing, when executed by the processing circuitry, the method of the third aspect.

According to a fifth aspect, there is provided a non-transitory computer-readable storage medium comprising instructions, which when executed by the processing circuitry, cause the processing circuitry to perform the method of the third aspect.

Effects and features of the fourth and fifth aspects are largely analogous to those described above in relation to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
Fig. 1 is an exemplary illustration of a marine vessel according to an example,
Figs. 2A - 2B are exemplary illustration of motions exposed to the marine vessel during operation according to an example,
Fig. 3A is an exemplary illustration of a pitch motion stabilizer according to an example,
Fig. 3B is an exemplary illustration of a pitch motion stabilizer according to another example,
Fig. 4 is an exemplary illustration of pitch accelerations by the marine vessel according to an example,
Fig. 5 is an exemplary illustration of the motion of the pitch motion stabilizer in Fig. 3A according to an example,
Fig. 6 is an exemplary flow chart of a method of controlling a pitch motion stabilizer, and
Fig. 7 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The disclosure described in the following may seek to reduce the trim angle of a marine vessel when the marine vessel is exposed to pitch accelerations of relatively high frequencies. A technical benefit may include that the trim angle is reduced when closed loop control of the pitch motion stabilizer is not possible due to the pitch accelerations being too fast in comparison to the dynamic abilities of the pitch motion stabilizer.

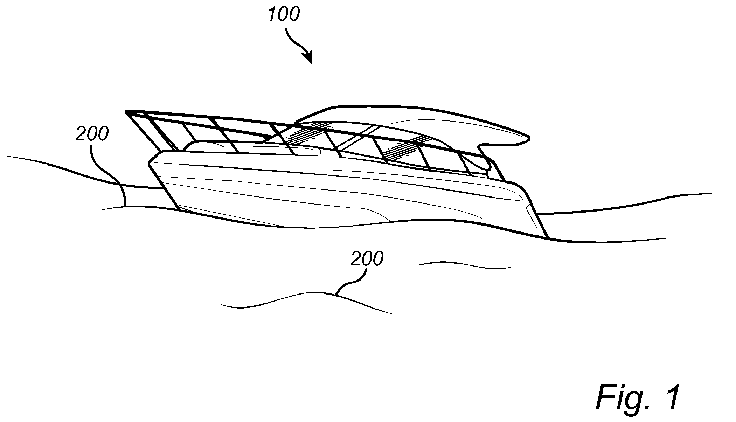

Fig. 1 is an exemplary illustration of a marine vessel 100 according to an example. The marine vessel 100 in Fig. 1 is illustrated as a recreational boat. It should however be readily understood that the marine vessel 100 of the present disclosure may equally as well be a cargo vessel such as e.g. a ship, and marine vessels with either an inboard motor or an outboard motor. During operation, the marine vessel 100 is exposed to various motions caused by the waves 200 of the sea. The motions of the marine vessel 100 differs depending on the amplitude and frequency of the waves 200, the speed of the marine vessel 100, if the marine vessel 100 is driving in an opposite or same direction compared to a wave propagation direction of the waves 200, etc.

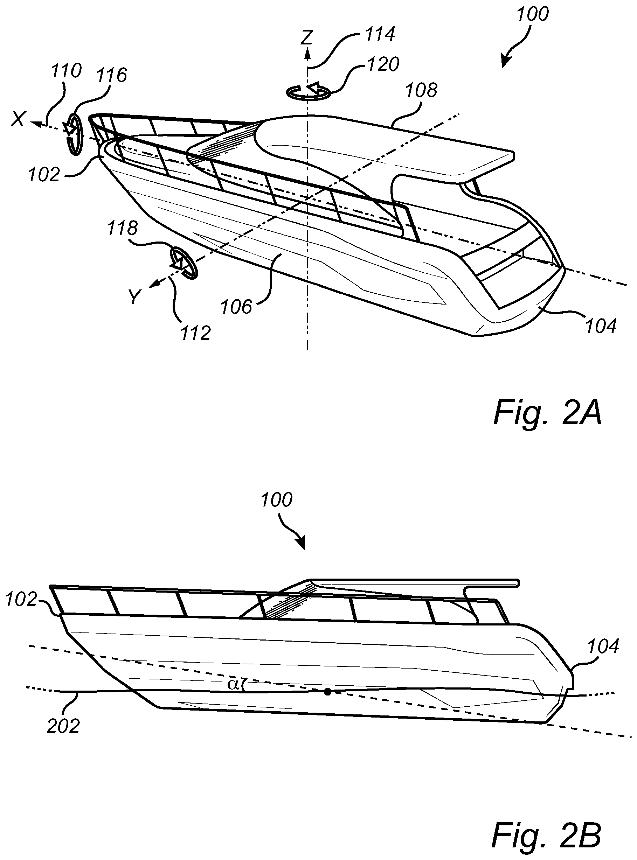

In order to describe various motions of the marine vessel 100, reference is made to Figs. 2A - 2B which are exemplary illustrations of motions exposed to the marine vessel 100 during operation according to an example. As can be seen in Fig. 2A, the marine vessel 100 comprises a bow 102, a stern 104, a port side 106 and a starboard side 108. The exemplifies marine vessel 100 is arranged in a coordinate system, in which the X-direction is along the marine vessel 100, i.e. along the driving direction of the marine vessel 100, the Y-direction is transverse to the X-direction, and the Z-direction is the vertical direction of the marine vessel 100. The coordinate system is preferably arranged at a center of gravity of the marine vessel 100.

During operation, the waves 200 may expose the marine vessel 100 to surge motion, also merely referred to as surge 110, which is a motion along the X-direction of the marine vessel 100. The marine vessel 100 may also be exposed to a sway motion, also merely referred to as sway 112, and a heave motion, also merely referred to as heave 114. The sway 112 is a motion along the Y-direction of the marine vessel 100 while the heave 114 is a motion along the Z-direction of the marine vessel 100. The marine vessel 100 may also be exposed to roll motion 116 at which the marine vessel 100 rotates around the X-direction, a pitch motion 118 at which the marine vessel 100 rotates around the Y-axis, and a yaw motion 120 at which the marine vessel 100 rotates around the Z-direction. The following disclosure will focus on the pitch motions 118 exposed to the marine vessel 100.

The pitch motion 118 causes the marine vessel 100 to assume a trim angle α as depicted in Fig. 2B. A positive trim angle α as illustrated in Fig. 2B implies that the bow 102 of the marine vessel 100 is raised relative the sea level 202, while the stern 104 is lowered relative to the sea level 202. A negative trim angle α on the other hand implies that the bow 102 will be directed towards the sea level 202, also referred to as bow down steering of the marine vessel 100. The stern 104 will thus, for a negative trim angle α, be raised relative to the sea level 202. In the following, when describing that the trim angle α is reduced, this should be construed as in relation to a positive trim angle α, i.e. the trim angle α is reduced to lower a raised bow 102 relative to the sea level 202.

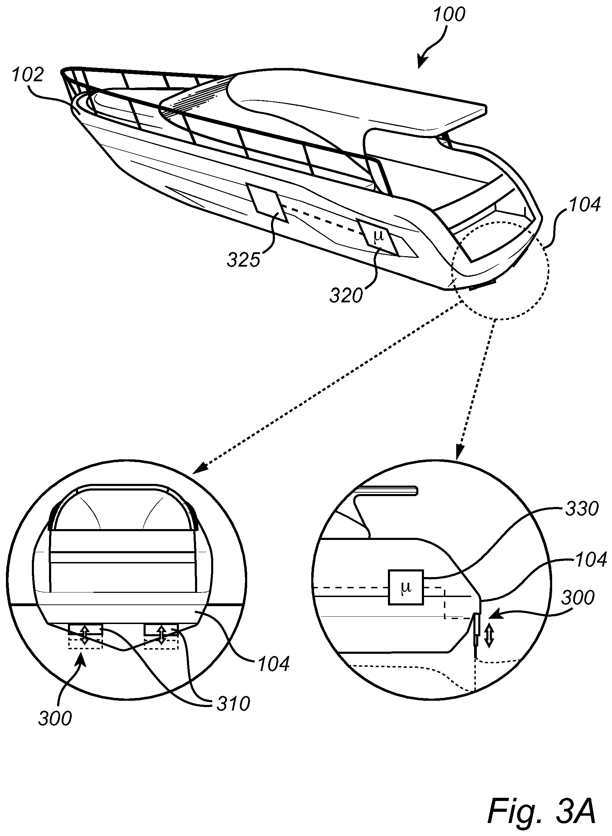

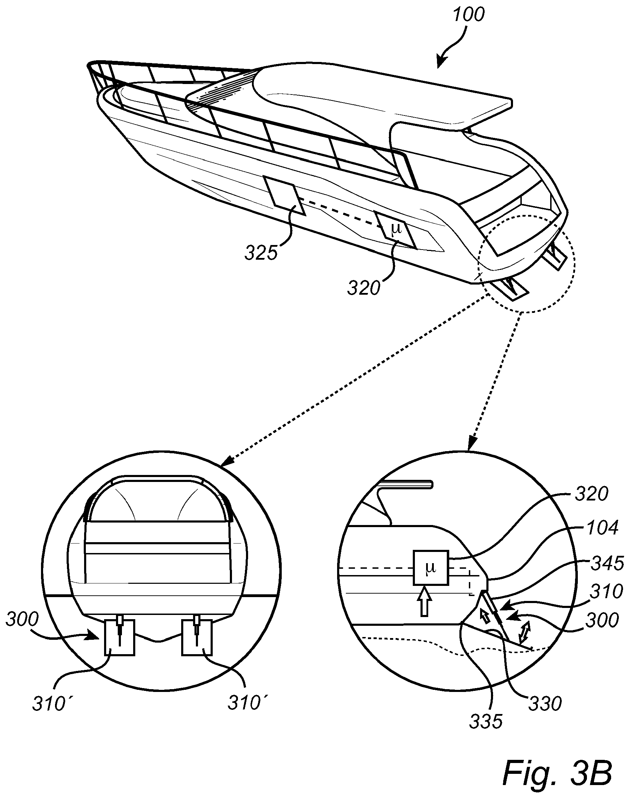

The trim angle α of the marine vessel 100 can be reduced by the use of a pitch motion stabilizer 300. In order to describe exemplified pitch motion stabilizers 300, reference is made to Figs. 3A and 3B illustrating such pitch motion stabilizers 300 according to examples. As can be seen in Figs. 3A and 3B, the pitch motion stabilizer 300 is preferably arranged at the stern 104 of the marine vessel 100. By actuating the pitch motion stabilizer 300, a pitch stiffness of the marine vessel 100 will increase and force the bow 102 of the marine vessel 100 in a vertical downward direction towards the sea level 202. It should however be readily understood that the pitch motion stabilizer 300 should be controlled to a sufficient degree to avoid the above described bow down steering. The pitch motion stabilizer 300 is preferably coupled to, and controlled by, processing circuitry 320. The processing circuitry 320 may advantageously be coupled to a motion detector 325. The motion detector 325 may detect pitch accelerations by the marine vessel 100. The motion detector 325 may advantageously be a gyro detecting, amongst others, the pitch accelerations, heave accelerations, etc.

With initial reference to Fig. 3A, a pitch motion stabilizer 300 in the form of an interceptor 310 is illustrated. The interceptor 310 is arranged at the stern 104 of the marine vessel 104 and coupled to, and controlled by, the processing circuitry 320. Preferably, the interceptor 310 is attached to the transom of the marine vessel 100. Further, the interceptor 310 may be controlled by a hydraulically controlled interceptor, a pneumatically controlled interceptor or an electrically controlled interceptor. To reduce the trim angle α of the marine vessel, the interceptor 310 is extended in a vertically downward direction from the stern 104 and into the water. An increased extension of the interceptor 310 into the water implies an increased pitch stiffness and damping of the marine vessel 100, i.e. the bow 102 will be forced further down for a fully extended interceptor 310 compared to less extended interceptor 310.

Turning to Fig. 3B which illustrates the pitch motion stabilizer 300 in the form of a pair of trim tabs 310' arranged at the stern 104 of the marine vessel 100. The trim tabs 310' are, in a similar vein as the interceptor 310, coupled to the processing circuitry 320 and may be controlled hydraulically, pneumatically or electrically. The trim tabs 310' exemplified in Fig. 3B each comprise a plate 330 rotatably coupled to the hull of the marine vessel 100, preferably to the transom, at a pivot joint 335. The trim tabs 310' of Fig. 3B also comprises a cylinder 345 connected between the hull and the plate 330. To reduce the trim angle α of the marine vessel, the plate 330 of the trim tabs 310' is forced into the water by extending the cylinder, thereby causing a rotation of the plate 330 around the pivot joint 335. An increased extension of the cylinder 345 will force the plate 330 of the trim tab 310' further into the water and provide an increased pitch stiffness of the marine vessel 100, i.e. the bow 102 will be forced further down for a fully extended cylinder 345 compared to less extended cylinder 345.

The pitch motion stabilizer 300 may have a limited responsiveness to the control signals received from the processing circuitry 320. In further detail, for a closed loop control where the processing circuitry 320 receives vessel motion data, from e.g. the motion detector 325, in the form of pitch accelerations by the marine vessel, the pitch motion stabilizer 300 may only be able to counteract pitch accelerations at lower frequencies. For higher frequency levels, the dynamics of the pitch motion stabilizer 300 may not be sufficiently rapid to sufficiently counteract such high frequency pitch disturbances.

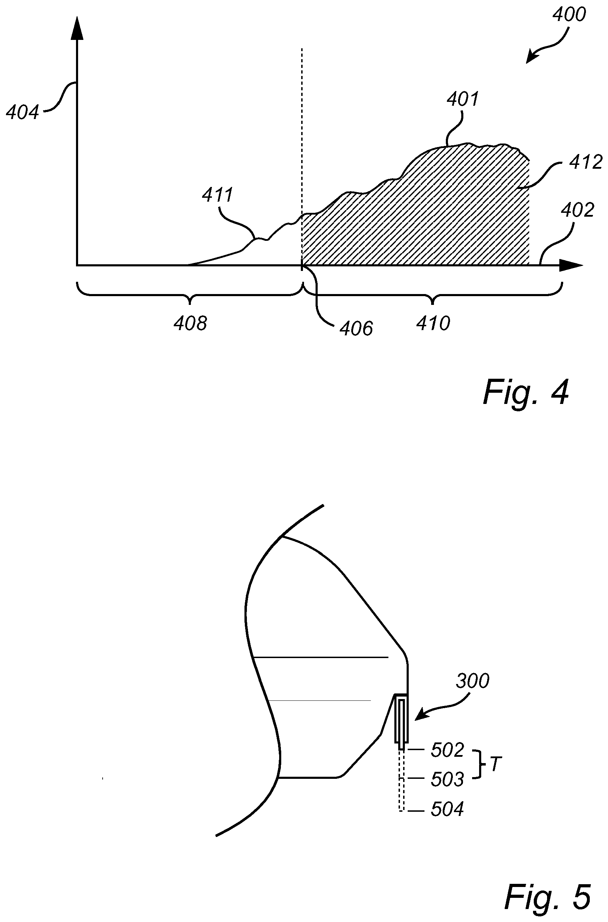

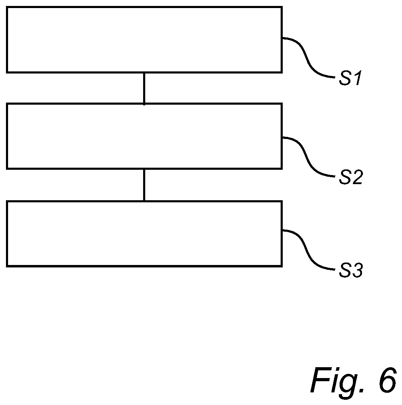

The following will therefore describe a method of the present disclosure of controlling the pitch motion stabilizer when the marine vessel 100 is exposed to pitch accelerations of high frequencies at which closed loop control will not be able to reduce pitch motions, and deviations from a desired trim angle α, in a desirable manner. Reference is therefore made to Figs. 4 - 6, of which Fig. 4 is an exemplary illustration of pitch accelerations by the marine vessel according to an example, Fig. 5 is an exemplary illustration of the motion of the pitch motion stabilizer in Fig. 3A and Fig. 6 is an exemplary flow chart of a method of controlling the pitch motion stabilizer. In the graph 400 illustrated in Fig. 4, the abscissa 402 represents the frequencies of the pitch accelerations 401 by the marine vessel 100, while the ordinate 404 represents the power of the frequencies. It should be readily understood that the following disclosure is equally applicable for the pitch motion stabilizer 300 described above in relation to Fig. 3B, i.e. the trim tabs, although only the example describing the interceptor 310 will be described.

During operation, the processing circuitry 320 obtains S1 operating data indicative of the maximum frequency 406 of operation of the pitch motion stabilizer 300. The operating data is thus indicative of how rapid the pitch motion stabilizer 300 can be controlled, i.e. the dynamics of the pitch motion stabilizer 300. In further detail, the maximum frequency 406 of operation is thus an indicator of the capability of the pitch motion stabilizer 300 to suppress pitch disturbances acting on the marine vessel 100. For frequencies higher than the maximum frequency of operation, the pitch motion stabilizer 300 may not be rapid enough to suppress pitch disturbances during closed loop control.

The operating data may be obtained as preconfigured data from a manufacturer of the pitch motion stabilizer 300. Such preconfigured data may thus indicate the maximum frequency 406 of operation for the specific pitch motion stabilizer. The operating data may also be obtained as indicated in Fig. 5. In Fig. 5, the operating data is obtained by a minimum time period T it takes for the pitch motion stabilizer 300 to travel from a fully retracted position 502 to a predetermined position 503 between the fully retracted position 502 and a fully expanded position 504. The fully expanded position 504 is indicated with dashed lines. The fully expanded position 504 is thus the position of the pitch motion stabilizer 300 at which the pitch motion stabilizer 300 can not be further expended into the water. The time period T it takes for the pitch motion stabilizer to travel the distance from the fully retracted position 502 to the predetermined position 503 may advantageously serve as an indicator of a frequency threshold, i.e. the maximum frequency 406 of operation, above which the pitch motion stabilizer 300 is unable to sufficiently suppress pitch disturbances during closed loop control. Thus, pitch accelerations of higher frequencies than the maximum frequency 406 may not be sufficiently suppressed by closed loop control of the pitch motion stabilizer. Preferably, the predetermined position 503 may be half the distance from the fully retracted position 502 to the fully expanded position 504.

Since the pitch motion stabilizer 300 may not sufficiently suppress pitch disturbances of higher frequencies, the processing circuitry sets S2 a low frequency pitch motion range 408 and a high frequency pitch motion range 410 of the marine vessel 100. As can be seen in Fig. 4, the low-frequency pitch motion range 408 is a frequency range below the maximum frequency 406 of operation of the pitch motion stabilizer 300, i.e. a frequency range from 0 to the maximum frequency 406. The high-frequency pitch motion range 410 on the other hand is a frequency range above the maximum frequency 406 of operation of the pitch motion stabilizer, i.e. from the maximum frequency 406 and above. For pitch accelerations in the low-frequency pitch motion range 408, the pitch motions may be sufficiently suppressed by closed loop control. In other words, the dynamics of the pitch motion stabilizer 300 are rapid enough to sufficiently suppress pitch accelerations in the low-frequency pitch motion range 408.

Further, during operation of the marine vessel 100, the processing circuitry 320 obtains S2 vessel motion data indicative of an amount of pitch accelerations by the marine vessel 100. In particular, the processing circuitry 320 obtains the amount of pitch accelerations 401 in the high-frequency pitch motion range 410. The vessel motion data indicative of the amount of pitch accelerations 401 may be obtained by the above described motion detector 325, e.g. the gyro, during operation of the marine vessel 100. The motion detector 325 thus detects the pitch accelerations acting on the marine vessel 100 during operation. As can be seen in Fig. 4, the pitch accelerations 401 in the high-frequency pitch motion range 410 have frequencies of different power 404. Thus, the amount of pitch accelerations for the frequencies in the high-frequency pitch motion range 410 can be obtained. Accordingly, and according to an example, the processing circuitry 320 may obtain a power content of the pitch accelerations 401 by the marine vessel in the high-frequency pitch motion range 410.

Further, and according to an example, the processing circuitry 320 may obtain the amount of pitch accelerations 401 by determining a root-mean-square (RMS) value of the pitch accelerations 401 in the high-frequency pitch motion range 410. The vessel motion data may be obtained by determining an area 412 formed by the pitch accelerations 401 in the high-frequency pitch motion range 410 as indicated in Fig. 4. The power 404 of the area 412 of the pitch accelerations 401 can thus indicate the vessel motion data.

Moreover, the pitch accelerations 401 are preferably obtained during a predetermined time period. Thus, the processing circuitry 320 can receive pitch accelerations during a predetermined time period and determine the power 404 of the frequencies of the pitch accelerations 401 obtained during the predetermined time period. The processing circuitry 320 preferably obtains the pitch accelerations 401 dynamically, where pitch accelerations obtained at a point in time falling outside the predetermined time period is not contributing when determining the amount of pitch accelerations 401 by the marine vessel 100. The predetermined time period may be set in a number of different manners. For example, the predetermined time period may be determined in response to a multiple of a largest period of the pitch accelerations 401 by the marine vessel 100.

Furthermore, when the processing circuitry 320 obtains the vessel motion data described above, the processing circuitry 320 reduces S3 the trim angle α of the marine vessel 100. The trim angle α is reduced by controlling the pitch motion stabilizer 300. In particular, the pitch motion stabilizer 300 is controlled in response to an increased amount of pitch accelerations 401 by the marine vessel in the high-frequency motion range 410. Thus, the pitch motion stabilizer 300 is extended into the water to a greater extent for a large amount of pitch accelerations 401 in the high-frequency motion range 410 compared to an extension of the pitch motion stabilizer 300 for a lower amount of pitch accelerations 401 in the high-frequency motion range 410. With reference to the above described examples, the pitch motion stabilizer 300 may be controlled in response to the power content of the pitch accelerations 401 by the marine vessel in the high-frequency pitch motion range 410 and/or in response to the RMS value of the pitch accelerations 401 in the high-frequency pitch motion range 410. Thus, the pitch motion stabilizer 300 may be extended into the water to a greater extent for a larger power content and/or RMS value of pitch accelerations 401 in the high-frequency motion range 410 compared to an extension of the pitch motion stabilizer 300 for a lower power content and/or RMS value of pitch accelerations 401 in the high-frequency motion range 410.

The pitch motion stabilizer 300 may be controlled by a gain factor. In particular, the gain factor may be used for setting a multiplier to the amount of pitch accelerations 401 in the high-frequency pitch motion range 410 to control the specific position of the pitch motion stabilizer 300 in the water. In addition, or as an alternative, the processing circuitry 320 may set a dead band to the obtained pitch accelerations. In particular, pitch accelerations forming part of the dead band may be excluded and not contribute to the control of the pitch motion stabilizer 300. The dead band may preferably be set to eliminate pitch accelerations below a predetermined acceleration threshold, or below a predetermined frequency threshold.

As described above, the marine vessel 100 is exposed to pitch accelerations 401 in the high-frequency pitch motion range 410. As is also evident from Fig. 4, the marine vessel 100 may also be exposed to pitch accelerations 411 in the low-frequency pitch motion range 408. As described above, when exposed to pitch accelerations in the low-frequency pitch motion range 408, the pitch motion stabilizer 300 can be controlled by closed loop control. Since the marine vessel 100 may be exposed to pitch accelerations in both the low 408 and high 410 frequency pitch motion ranges, it may be beneficial that the pitch motion stabilizer 300 is not extended to its maximum extension into the water when controlled in response to the pitch accelerations in the high-frequency pitch motion range 410. Put it differently, it may be beneficial to also be able to further extend the pitch motion stabilizer 300 when controlled in closed loop control at times when the marine vessel 100 is exposed to pitch accelerations of lower frequencies.

In order to enable the pitch motion stabilizer 300 to be extended further into the water during closed loop control, the processing circuitry 320 may advantageously control the pitch motion stabilizer 300 based on a saturation level. The processing circuitry 320 may thus set a saturation level that defines a maximum expanded position of the pitch motion stabilizer 300 when the pitch motion stabilizer is controlled in response to the pitch accelerations in the high-frequency pitch motion range 410. Hence, the saturation level may be set to a ratio of a maximum extension of the pitch motion stabilizer 300. As a non-limiting example, if the saturation level is set to 80%, the pitch motion stabilizer 300 is able to be extended a further 20% by closed loop control.

The maximum expanded position for the pitch motion stabilizer 300 when the marine vessel 100 is exposed to pitch accelerations 401 in the high-frequency pitch motion range 410 may be set in other manners as described above. For example, the maximum expanded position may be set as a function of a ratio of the pitch accelerations in the low 408 and high 410 frequency pitch motion ranges. This may be obtained by the processing circuitry 320 obtaining vessel motion data indicative of the amount of pitch accelerations 411 by the marine vessel 100 in the low-frequency pitch motion range 408. The processing circuitry 320 may also determine a total amount of pitch accelerations by the marine vessel 100, i.e. pitch accelerations of the marine vessel 100 in both the low frequency pitch motion range 408 and the high frequency pitch motion range 410. The maximum expanded position of the pitch motion stabilizer 300 is thus determined in response to a ratio of the amount of pitch accelerations in the high-frequency pitch motion range 410 to the total amount of pitch accelerations. The pitch motion stabilizer 300 is thus controlled to not exceed such maximum expanded position when the pitch motion stabilizer 300 is controlled in response to pitch accelerations in the high-frequency pitch motion range 410.

Further, the maximum expanded position of the pitch motion stabilizer 300 may also be set, or calibrated, such that bow down of the marine vessel 100 is avoided. The processing circuitry 320 may thus calibrate a value of the maximum expanded position during operation, or adjust the motion of the pitch motion stabilizer 300, when determining or estimating bow down of the marine vessel 100.

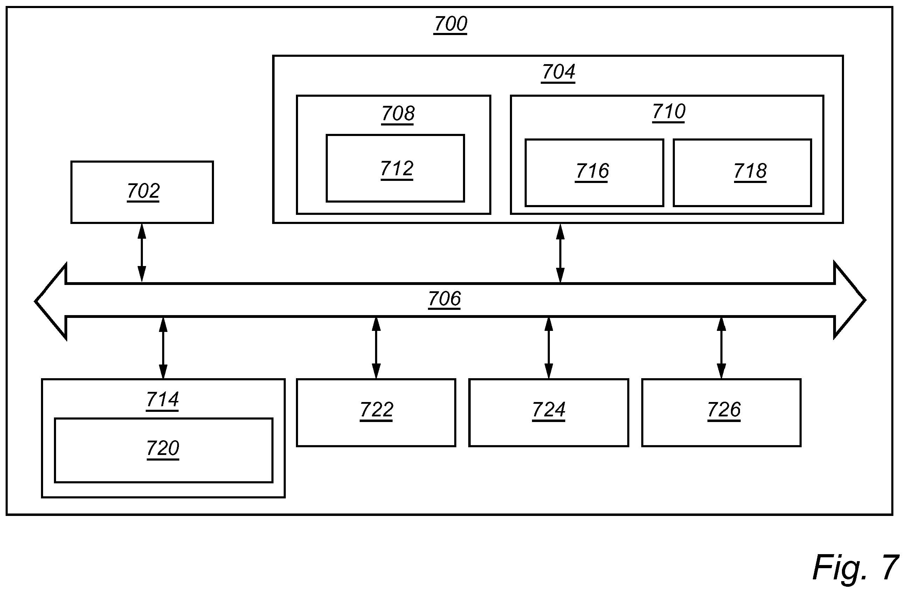

Turning now to Fig. 7 which is a schematic diagram of a computer system 700 for implementing examples disclosed herein. The computer system 700 is adapted to execute instructions from a computer-readable medium to perform these and/or any of the functions or processing described herein. The computer system 700 may be connected (e.g., networked) to other machines in a LAN, an intranet, an extranet, or the Internet. While only a single device is illustrated, the computer system 700 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 700 may comprise at least one computing device or electronic device capable of including firmware, hardware, and/or executing software instructions to implement the functionality described herein. The computer system 700 may include processing circuitry 702 (e.g., processing circuitry including one or more processor devices or control units), a memory 704, and a system bus 706. The computer system 700 may include at least one computing device having the processing circuitry 702. The system bus 706 provides an interface for system components including, but not limited to, the memory 704 and the processing circuitry 702. The processing circuitry 702 may include any number of hardware components for conducting data or signal processing or for executing computer code stored in memory 704. The processing circuitry 702 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 702 may further include computer executable code that controls operation of the programmable device.

The system bus 706 may be any of several types of bus structures that may further interconnect to a memory bus (with or without a memory controller), a peripheral bus, and/or a local bus using any of a variety of bus architectures. The memory 704 may be one or more devices for storing data and/or computer code for completing or facilitating methods described herein. The memory 704 may include database components, object code components, script components, or other types of information structure for supporting the various activities herein. Any distributed or local memory device may be utilized with the systems and methods of this description. The memory 704 may be communicably connected to the processing circuitry 702 (e.g., via a circuit or any other wired, wireless, or network connection) and may include computer code for executing one or more processes described herein. The memory 704 may include non-volatile memory 708 (e.g., read-only memory (ROM), erasable programmable read-only memory (EPROM), electrically erasable programmable read-only memory (EEPROM), etc.), and volatile memory 710 (e.g., random-access memory (RAM)), or any other medium which can be used to carry or store desired program code in the form of machine-executable instructions or data structures and which can be accessed by a computer or other machine with processing circuitry 702. A basic input/output system (BIOS) 712 may be stored in the non-volatile memory 708 and can include the basic routines that help to transfer information between elements within the computer system 700.

The computer system 700 may further include or be coupled to a non-transitory computer-readable storage medium such as the storage device 714, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 714 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 714 and/or in the volatile memory 710, which may include an operating system 716 and/or one or more program modules 718. All or a portion of the examples disclosed herein may be implemented as a computer program 720 stored on a transitory or non-transitory computer-usable or computer-readable storage medium (e.g., single medium or multiple media), such as the storage device 714, which includes complex programming instructions (e.g., complex computer-readable program code) to cause the processing circuitry 702 to carry out actions described herein. Thus, the computer-readable program code of the computer program 720 can comprise software instructions for implementing the functionality of the examples described herein when executed by the processing circuitry 702. In some examples, the storage device 714 may be a computer program product (e.g., readable storage medium) storing the computer program 720 thereon, where at least a portion of a computer program 720 may be loadable (e.g., into a processor) for implementing the functionality of the examples described herein when executed by the processing circuitry 702. The processing circuitry 702 may serve as a controller or control system for the computer system 700 that is to implement the functionality described herein.

The computer system 700 may include an input device interface 722 configured to receive input and selections to be communicated to the computer system 700 when executing instructions, such as from a keyboard, mouse, touch-sensitive surface, etc. Such input devices may be connected to the processing circuitry 702 through the input device interface 722 coupled to the system bus 706 but can be connected through other interfaces, such as a parallel port, an Institute of Electrical and Electronic Engineers (IEEE) 1394 serial port, a Universal Serial Bus (USB) port, an IR interface, and the like. The computer system 700 may include an output device interface 724 configured to forward output, such as to a display, a video display unit (e.g., a liquid crystal display (LCD) or a cathode ray tube (CRT)). The computer system 700 may include a communications interface 726 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system configured to actuate a pitch motion stabilizer (300) of a marine vessel (100), the computer system comprising processing circuitry configured to:
- obtain operating data indicative of a maximum frequency of operation of the pitch motion stabilizer (300), the maximum frequency of operation being indicative of a capability of the pitch motion stabilizer (300) to suppress pitch disturbances acting on the marine vessel,
- set a low-frequency pitch motion range (408) and a high-frequency pitch motion range (410) of the marine vessel (100), the low-frequency pitch motion range being a frequency range below the maximum frequency (406) of operation of the pitch motion stabilizer, and the high-frequency pitch motion range being a frequency range above the maximum frequency (406) of operation of the pitch motion stabilizer (300),
- obtain vessel motion data indicative of an amount of pitch accelerations (401) by the marine vessel (100) in the high-frequency pitch motion range (410), and
- reduce a trim angle (α) of the marine vessel (100) by controlling the pitch motion stabilizer (300) in response to an increased amount of pitch accelerations by the marine vessel (100) in the high-frequency pitch motion range (410).

2. The computer system of claim 1, wherein the pitch motion stabilizer (300) is controlled in response to an increased power content of the pitch accelerations (401) by the marine vessel (100) in the high-frequency pitch motion range (410).

3. The computer system of any one of claims 1 or 2, wherein the pitch motion stabilizer (300) is controlled in response to a root-mean-square value of the pitch accelerations (401) in the high-frequency pitch motion range (410).

4. The computer system of any one of the preceding claims, wherein the vessel motion data indicative of an amount of pitch accelerations (401) by the marine vessel (100) in the high-frequency pitch motion range is obtained during a predetermined time period.

5. The computer system of claim 4, wherein the predetermined time period is determined in response to a multiple of a largest period of the pitch accelerations (401) by the marine vessel (100) in the high-frequency pitch motion range (410).

6. The computer system of any one of the preceding claims, wherein the pitch motion stabilizer (300) is controlled by a gain factor.

7. The computer system of any of the preceding claims, wherein the processing circuitry is configured to set a dead band in which pitch accelerations (401) is non-contributing to control of the pitch motion stabilizer (300).

8. The computer system of any one of the preceding claims, wherein the pitch motion stabilizer (300) is controlled based on a saturation level, the saturation level defining a maximum expanded position of the pitch motion stabilizer (300) when the pitch motion stabilizer (300) is controlled in response to the pitch accelerations in the high-frequency pitch motion range (410).

9. The computer system of any one of the preceding claims, the processing circuitry being configured to:
- obtain vessel motion data indicative of an amount of pitch accelerations by the marine vessel in the low-frequency pitch motion range,
- determine a total amount of pitch accelerations by the marine vessel, the total pitch accelerations being the pitch accelerations in the low-frequency pitch motion range and the pitch accelerations in the high-frequency pitch motion range,
- determine a maximum expanded position of the pitch motion stabilizer in response to a ratio of the amount of pitch accelerations in the high-frequency pitch motion range to the total amount of pitch accelerations, and
- control the pitch motion stabilizer to not exceed the maximum expanded position.

10. The computer system of any one of the preceding claims, wherein the operating data indicative of the maximum frequency is obtained by a minimum time period for the pitch motion stabilizer to travel from a fully retracted position to a predetermined position arranged between the fully retracted position and a fully expanded position of the pitch motion stabilizer.

11. The computer system of any one of the preceding claims, wherein the computer system further comprises a motion detector configured to determine the pitch accelerations by the marine vessel.

12. A marine vessel (100), comprising the computer system of any of claims 1 - 11.

13. A computer-implemented method of actuating a pitch motion stabilizer (300) of a marine vessel (100), the method comprising:
- obtaining (S1), by processing circuitry of a computer system, data indicative of a maximum frequency of operation of the pitch motion stabilizer (300), the maximum frequency of operation being indicative of a capability of the pitch motion stabilizer (300) to suppress pitch disturbances acting on the marine vessel,
- setting (S2), by the processing circuity, a low-frequency pitch motion range (408) and a high-frequency pitch motion range (410) of the marine vessel (100), the low-frequency pitch motion range (408) being a frequency range below the maximum frequency (406) of operation of the pitch motion stabilizer (300), and the high-frequency pitch motion range (410) being a frequency range above the maximum frequency of operation (406) of the pitch motion stabilizer (300),
- obtaining (S3), by the processing circuitry, vessel motion data indicative of an amount of pitch accelerations (401) by the marine vessel (100) in the high-frequency pitch motion range (410), and
- reducing (S4), by the processing circuitry, a trim angle (α) of the marine vessel (100) by controlling the pitch motion stabilizer (300) in response to an increased amount of pitch accelerations by the marine vessel (100) in the high-frequency pitch motion range (410).

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.

## Patentansprüche

1. Computersystem, das dazu konfiguriert ist, einen Nickbewegungsstabilisator (300) eines Wasserfahrzeugs (100) zu betätigen, wobei das Computersystem eine Verarbeitungsschaltung umfasst, die konfiguriert ist zum:
- Erfassen von Betriebsdaten, die eine maximale Betriebsfrequenz des Nickbewegungsstabilisators (300) angeben, wobei die maximale Betriebsfrequenz eine Fähigkeit des Nickbewegungsstabilisators (300) angibt, Nickstörungen, die auf das Wasserfahrzeug einwirken, zu unterdrücken,
- Festlegen eines Niederfrequenz-Nickbewegungsbereichs (408) und eines Hochfrequenz-Nickbewegungsbereichs (410) des Wasserfahrzeugs (100), wobei der Niederfrequenz-Nickbewegungsbereich ein Frequenzbereich unterhalb der maximalen Betriebsfrequenz (406) des Nickbewegungsstabilisators ist und der Hochfrequenz-Nickbewegungsbereich ein Frequenzbereich oberhalb der maximalen Betriebsfrequenz (406) des Nickbewegungsstabilisators (300) ist,
- Erfassen von Bewegungsdaten des Wasserfahrzeugs, die ein Ausmaß für Nickbeschleunigungen (401) des Wasserfahrzeugs (100) im Hochfrequenz-Nickbewegungsbereich (410) angeben, und
- Reduzieren eines Trimmwinkels (α) des Wasserfahrzeugs (100) durch Steuern des Nickbewegungsstabilisators (300) als Reaktion auf ein erhöhtes Ausmaß der Nickbeschleunigungen des Wasserfahrzeugs (100) im Hochfrequenz-Nickbewegungsbereich (410).

2. Computersystem nach Anspruch 1, wobei der Nickbewegungsstabilisator (300) als Reaktion auf einen erhöhten Leistungsgehalt der Nickbeschleunigungen (401) des Wasserfahrzeugs (100) im Hochfrequenz-Nickbewegungsbereich (410) gesteuert wird.

3. Computersystem nach einem der Ansprüche 1 oder 2, wobei der Nickbewegungsstabilisator (300) als Reaktion auf einen quadratischen Mittelwert der Nickbeschleunigungen (401) im Hochfrequenz-Nickbewegungsbereich (410) gesteuert wird.

4. Computersystem nach einem der vorhergehenden Ansprüche, wobei die Bewegungsdaten des Wasserfahrzeugs, die ein Ausmaß der Nickbeschleunigungen (401) des Wasserfahrzeugs (100) im Hochfrequenz-Nickbewegungsbereich angeben, während einer vorbestimmten Zeitdauer erfasst werden.

5. Computersystem nach Anspruch 4, wobei die vorbestimmte Zeitdauer in Reaktion auf ein Vielfaches einer größten Periode der Nickbeschleunigungen (401) des Wasserfahrzeugs (100) im Hochfrequenz-Nickbewegungsbereich (410) bestimmt wird.

6. Computersystem nach einem der vorhergehenden Ansprüche, wobei der Nickbewegungsstabilisator (300) mittels eines Verstärkungsfaktors gesteuert wird.

7. Computersystem nach einem der vorhergehenden Ansprüche, wobei die Verarbeitungsschaltung dazu konfiguriert ist, ein Totband festzulegen, in dem Nickbeschleunigungen (401) nicht zur Steuerung des Nickbewegungsstabilisators (300) beitragen.

8. Computersystem nach einem der vorhergehenden Ansprüche, wobei der Nickbewegungsstabilisator (300) basierend auf einem Sättigungsniveau gesteuert wird, wobei das Sättigungsniveau eine maximale Auslenkposition des Nickbewegungsstabilisators (300) definiert, wenn der Nickbewegungsstabilisator (300) in Reaktion auf die Nickbeschleunigungen im Hochfrequenz-Nickbewegungsbereich (410) gesteuert wird.

9. Computersystem nach einem der vorhergehenden Ansprüche, wobei die Verarbeitungsschaltung konfiguriert ist zum:
- Erfassen von Bewegungsdaten des Wasserfahrzeugs, die ein Ausmaß von Nickbeschleunigungen im Niederfrequenz-Nickbewegungsbereich angeben,
- Bestimmen eines Gesamt-Ausmaßes der Nickbeschleunigungen des Wasserfahrzeugs, wobei das Gesamt-Ausmaß die Nickbeschleunigungen im Niederfrequenz-Nickbewegungsbereich und die Nickbeschleunigungen im Hochfrequenz-Nickbewegungsbereich bildet,
- Bestimmen einer maximalen Auslenkposition des Nickbewegungsstabilisators in Reaktion auf ein Verhältnis des Ausmaßes der Nickbeschleunigungen im Hochfrequenz-Nickbewegungsbereich zum Gesamt-Ausmaß der Nickbeschleunigungen, und
- Steuern des Nickbewegungsstabilisators derart, dass die maximale Auslenkposition nicht überschritten wird.

10. Computersystem nach einem der vorhergehenden Ansprüche, wobei die Betriebsdaten, die die maximale Frequenz angeben, durch eine minimale Zeitdauer bestimmt werden, die der Nickbewegungsstabilisator benötigt, um von einer vollständig eingezogenen Stellung zu einer vorbestimmten Stellung zu verfahren, welche zwischen der vollständig eingezogenen Stellung und einer vollständig ausgefahrenen Stellung des Nickbewegungsstabilisators angeordnet ist.

11. Computersystem nach einem der vorhergehenden Ansprüche, wobei das Computersystem ferner einen Bewegungssensor umfasst, der dazu konfiguriert ist, die Nickbeschleunigungen des Wasserfahrzeugs zu bestimmen.

12. Wasserfahrzeug (100), umfassend ein Computersystem nach einem der Ansprüche 1 bis 11.

13. Computerimplementiertes Verfahren zum Betätigen eines Nickbewegungsstabilisators (300) eines Wasserfahrzeugs (100), umfassend:
- Erfassen (S1), mittels Verarbeitungsschaltung eines Computersystems, von Daten, die eine maximale Betriebsfrequenz des Nickbewegungsstabilisators (300) angeben, wobei die maximale Betriebsfrequenz eine Fähigkeit des Nickbewegungsstabilisators (300) angibt, Nickstörungen, die auf das Wasserfahrzeug einwirken, zu unterdrücken,
- Festlegen (S2), durch die Verarbeitungsschaltung, eines Niederfrequenz-Nickbewegungsbereichs (408) und eines Hochfrequenz-Nickbewegungsbereichs (410) des Wasserfahrzeugs (100), wobei der Niederfrequenz-Nickbewegungsbereich (408) ein Frequenzbereich unterhalb der maximalen Betriebsfrequenz (406) des Nickbewegungsstabilisators (300) ist und der Hochfrequenz-Nickbewegungsbereich (410) ein Frequenzbereich oberhalb der maximalen Betriebsfrequenz (406) des Nickbewegungsstabilisators (300) ist,
- Erfassen (S3), durch die Verarbeitungsschaltung, von Bewegungsdaten des Wasserfahrzeugs, die ein Ausmaß von Nickbeschleunigungen (401) des Wasserfahrzeugs (100) im Hochfrequenz-Nickbewegungsbereich (410) angeben, und
- Reduzieren (S4), durch die Verarbeitungsschaltung, eines Trimmwinkels (α) des Wasserfahrzeugs (100) durch Steuern des Nickbewegungsstabilisators (300) als Reaktion auf ein erhöhtes Ausmaß der Nickbeschleunigungen des Wasserfahrzeugs (100) im Hochfrequenz-Nickbewegungsbereich (410).

14. Computerprogrammprodukt, umfassend Programmcode zur Ausführung des Verfahrens nach Anspruch 13, wenn der Programmcode von der Verarbeitungsschaltung ausgeführt wird.

15. Nichtflüchtiges, computerlesbares Speichermedium, umfassend Anweisungen, die bei Ausführung durch die Verarbeitungsschaltung die Verarbeitungsschaltung veranlassen, das Verfahren nach Anspruch 13 durchzuführen.

## Revendications

1. Système informatique configuré pour actionner un stabilisateur de tangage (300) d'un navire (100), le système informatique comprenant des circuits de traitement configurés pour :
- obtenir des données de fonctionnement indiquant une fréquence de fonctionnement maximale du stabilisateur de tangage (300), la fréquence de fonctionnement maximale indiquant une capacité du stabilisateur de tangage (300) à supprimer les perturbations de tangage agissant sur le navire,
- définir une plage de tangage à base fréquence (408) et une plage de tangage à haute fréquence (410) du navire (100), la plage de tangage à base fréquence étant une plage de fréquence inférieure à la fréquence maximale (406) de fonctionnement du stabilisateur de tangage et la plage de tangage à haute fréquence étant une plage de fréquences supérieure à la fréquence maximale (406) de fonctionnement du stabilisateur de tangage (300),
- obtenir des données de mouvement du navire indiquant une proportion des accélérations de tangage (401) par le navire (100) dans la plage de tangage à haute fréquence (410) et
- réduire un angle d'assiette (α) du navire (100) en commandant le stabilisateur de tangage (300) en réponse à une proportion accrue des accélérations de tangage par le navire (100) dans la plage de mouvement de tangage à haute fréquence (410).

2. Système informatique selon la revendication 1, dans lequel le stabilisateur de tangage (300) est commandé en réponse à une augmentation de la puissance des accélérations de tangage (401) par le navire (100) dans la plage de mouvement de tangage à haute fréquence (410).

3. Système informatique selon une quelconque des revendications 1 ou 2, dans lequel le stabilisateur de tangage (300) est commandé en réponse à une valeur efficace des accélérations de tangage (401) dans la plage de mouvement de tangage à haute fréquence (410).

4. Système informatique selon une quelconque des revendications précédentes, dans lequel les données de mouvement du navire, indicatives d'une proportion des accélérations de tangage (401) par le navire (100) dans la plage de mouvements de tangage à haute fréquence sont obtenues pendant une période prédéterminée.

5. Système informatique selon la revendication 4, dans lequel la période prédéterminée est déterminée en réponse à un multiple d'une période maximale des accélérations de tangage (401) par le navire (100) dans la plage de mouvements de tangage à haute fréquence (410).

6. Système informatique selon une quelconque des revendications précédentes, dans lequel le stabilisateur de tangage (300) est commandé par un facteur de gain.

7. Système informatique selon une quelconque des revendications précédentes, dans lequel le circuit de traitement est configuré pour définir une zone morte dans laquelle les accélérations de tangage (401) ne contribuent pas à la commande du stabilisateur de tangage (300).

8. Système informatique selon une quelconque des revendications précédentes, dans lequel le stabilisateur de tangage (300) est commandé sur la base d'un niveau de saturation, le niveau de saturation définissant une position d'extension maximale du stabilisateur de tangage (300) lorsque le stabilisateur de tangage (300) est commandé en réponse aux accélérations de tangage dans la plage de mouvement de tangage à haute fréquence (410).

9. Système informatique selon une quelconque des revendications précédentes, les circuits de traitement étant configurés pour :
- obtenir des données de mouvement du navire indiquant une proportion des accélérations de tangage par le navire dans la plage de tangage à basse fréquence ;
- déterminer une proportion totale des accélérations de tangage par le navire, les accélérations de tangage totales étant la somme des accélérations de tangage dans la plage de tangage à basse fréquence et des accélérations de tangage dans la plage de tangage à haute fréquence ;
- déterminer une position d'extension maximale du stabilisateur de tangage en réponse à un rapport entre la proportion des accélérations de tangage dans la plage de haute fréquence et la proportion totale des accélérations de tangage ; et
- commander le stabilisateur de tangage afin qu'il ne dépasse pas la position d'extension maximale.

10. Système informatique selon une quelconque des revendications précédentes, dans lequel les données de fonctionnement indicatives de la fréquence maximale sont obtenues après une période minimale nécessaire au stabilisateur de tangage pour se déplacer d'une position complètement rétractée à une position prédéterminée disposée entre la position complètement rétractée et une position complètement déployée du stabilisateur de tangage.

11. Système informatique selon une quelconque des revendications précédentes, dans lequel le système informatique comprend en outre un détecteur de mouvement configuré pour déterminer les accélérations de tangage par le navire.

12. Navire (100), comprenant le système informatique d'une quelconque des revendications 1 à 11.

13. Procédé informatisé d'actionnement d'un stabilisateur de tangage (300) d'un navire (100), le procédé comprenant :
- l'obtention (S1) par des circuits de traitement d'un système informatique, des données de fonctionnement indiquant une fréquence de fonctionnement maximale du stabilisateur de tangage (300), la fréquence de fonctionnement maximale indiquant une capacité du stabilisateur de tangage (300) à supprimer les perturbations de tangage agissant sur le navire,
- la définition (S2), par les circuits de traitement d'une plage de tangage à base fréquence (408) et une plage de tangage à haute fréquence (410) du navire (100), la plage de tangage à base fréquence (408) étant une plage de fréquence inférieure à la fréquence maximale (406) de fonctionnement du stabilisateur de tangage et la plage de tangage à haute fréquence (410) étant une plage de fréquences supérieure à la fréquence maximale de fonctionnement (406) de fonctionnement du stabilisateur de tangage (300),
- l'obtention (S3), par les circuits de traitement, des données de mouvement du navire indiquant une proportion des accélérations de tangage (401) par le navire (100) dans la plage de tangage à haute fréquence (410) et
- la réduction (S4), par les circuits de traitement, d'un angle d'assiette (α) du navire (100) en commandant le stabilisateur de tangage (300) en réponse à une proportion accrue des accélérations de tangage par le navire (100) dans la plage de mouvement de tangage à haute fréquence (410).

14. Produit de programme informatique comprenant un code de programme pour exécuter, lorsqu'il est exécuté par le circuit de traitement, le procédé de la revendication 13.

15. Support de mémorisation non transitoire lisible par ordinateur comprenant des instructions qui, lorsqu'elles sont exécutées par les circuits de traitement, amènent les circuits de traitement à exécuter le procédé de la revendication 13.
